# EUROPEAN PATENT APPLICATION

(11) **EP 1 199 645 A1**
(43) Date of publication of application: **24.04.2002**
(21) Application number: 00650154.8
(22) Date of filing: 16.10.2000
(51) Int. Cl.: G06F 17/30

(54) **A value based information system**

(71) Applicant: Helde Enterprises Limited, Glanmire, County Cork (IE)
(72) Inventor: Shaughnessy, Haydn, Bandon, County Cork (IE); O'Brien, John, Glanmire, County Cork (IE)
(74) Representative: O'Connor, Donal Henry

(57) **Abstract**

A value based method for the collection and dissemination of information in a system having a server computer (5) an input devices (3) operated by members, connected by a communications network (1). Searches and reports prepared from search data and inputted into the system are allocated organisation IP values by the member inputting or the member downloading the data or by the system itself. The organisation IP value can be used as a measure of the value of the data.

## Description

### Introduction

The present invention relates to a value based method for the collection and dissemination of information acquired as a result of a search carried out by a member of an organisation, the members forming part of a system including at least a main server and input devices operated by the member, the server and input devices being connected together by a communications network. Essentially, it is a value based method and system for information retrieval, organisation and exchange.

In this specification, the term "organisation" can relate to a company, a group of people, a group of companies having some relationship between each other, for example, parent and subsidiary, or indeed companies that are totally separate legal entities, indeed even possibly directly competing companies who have come together to form the organisation. Further, a member could be one individual or a group of individuals or indeed a group of such companies which could in turn form another organisation within the larger one.

The World Wide Web (WWW) is characterised by apparently limitless information and the problem of retrieving from this, information which is pertinent and useful. The WWW has an estimated 1 billion significant uniform resource locators (URLs). The rate of growth of the WWW indicates that this number will double within five years.

This body of information is becoming increasingly important to business corporations. Whereas until recently the providers of management information services focussed on internal information generation and flow, it is becoming increasingly evident that the external environment is of at least equal importance and further must be integrated into the internal information system.

A problem also exists in that the costs of maintaining the Internet are nowhere recovered adequately as fees for information provision. A defining characteristic of the WWW, it might be said, is the fact that information is apparently free to the user. Not only is information free, but increasingly the cost of access to information is also becoming free to the user, with un-metered telecommunications and unpaid Internet Service Provision. At the same time, there is still an acquisition cost.

The financial markets have endorsed "free" provision by rating highly companies that have moved into this business model. This has gone so far that certain companies have equity that is rated at many hundreds of times the earnings of the company. Large traditional companies have seen small upstarts stealing significant market share, quickly, and enjoying exponentially higher market capitalisations as a result. This phenomenon is largely attributed to the growing importance of intellectual capital in companies.

The Securities Exchange Commission (SEC) in New York has reacted to recent developments by insisting that listed companies disclose their inherent intellectual value. This can be measured as Intellectual Property or a variant on human capital measurement techniques such as staff qualifications. As yet, the SEC has not insisted that the output of these measures are included in company balance sheets, but this is clearly in prospect. A decade ago, an accountant's view of fixed asset values in a company was a significant measure of worth. Now, it is almost irrelevant. What is relevant is the human capital and that for many companies goes unmeasured and undisclosed to investors. Where it is disclosed, it is usually by values ascribed to statutory IP such as patents or trade marks. There is, to date, no satisfactory valuation of all the other intellectual property.

There are a multitude of problems associated with the way organisations acquire information from external sources, combine this with internal information, collate this information, disseminate it and then evaluate its use. This latter issue is extremely important.

It is self-evident that economic goods cannot be provided indefinitely without an economic return. The Internet or WWW is characterised as an information economy and its defining characteristic is the free provision of information. It should be recognised that there is a fundamental paradox here that needs to be resolved. The value of the Internet as an information rich medium has to be realised in recognisable economic measures - income, revenue, profits, both for the provider and the recipient.

The Internet is lauded as a medium that makes markets work more efficiently. In perfect markets, information becomes a highly prized asset. In the financial markets, the collection of information, its collation and analysis, are the difference between failure and huge rewards. The distribution of free information seems anachronistic or paradoxical in an environment whose major benefit is the eradication of market frictions.

It might be argued that the provision of free information is itself a contribution to a frictionless market. This assumes, however, that too many things are equal. The economic benefit of a frictionless market is derived from the lack of impediments to trade and it is a serious mistake to conflate this "freedom" with an absence of economic return on information. The intelligent application of information will never be distributed equally. The quality that the Internet provides is the equal opportunity to purchase at a given price level (and to influence price) not the opportunity to acquire value without charge.

The result of these developments if that the information economy is booming and yet is threatened by a lack of revenues. This is an alarming paradox. If companies or individuals cannot make information pay and if information as it is collated and disseminated attracts no recognisable measures of value, then the rationale for the information economy is itself threatened. This is akin to a manufacturer not being able to charge for goods produced. For both the provider and the acquirer of such information, there is a need to value it.

One problem in valuing information acquired externally is that the increasing volume of information available appears to reduce its economic value. The sheer scale of the World Wide Web makes it increasingly difficult for users to identify information that might be useful to them. Search engines typically return many thousands of possible sites of interest. In the course of processing these, users may typically go down blind alleys or may otherwise recover too much information and as a consequence make insufficient use of what they have found, give up the search before they find what they need or settle for the first piece of significant information. With such inadequate systems of information retrieval in place, users will be understandably reluctant to spend money on the information they acquire. The cost they can recognise is the time and effort acquiring the information. Its intrinsic value is more difficult to ascertain.

Typically, it will also be difficult for users to organize and store the results of their searching for use in future projects or reports. The main methods of storing electronically the results of a search are through a so-called favorites list or bookmark, that is to say, a list recording those sites the user found most interesting. These lists can be organised into folders but can also quickly become large and do not structure information in a hierarchical fashion (in the sense of truly categorizing and sub-categorizing into knowledge trees) without considerable effort on the part of the user. Nor are they able to pre-organise searching or automatically store information at the data level or site level into categories or subcategories.

Having acquired information, this then becomes a problematic experience for users, who are again likely to use this negative experience as a reason for not paying. The seriousness of this situation can be seen from the fact that there are now several thousand search engines available. Even in the category of search engines design for general use, there has recently been a proliferation. Apart from the market leaders such as YAHOO and Alta Vista, there are now others such as Hot Bot, Ask Jeeves, Google, Northern Light, GoTO, Deja, Voila, and Direct Hit. There is further a whole new generation of search engines trading on partial differentiation such as Alltheweb.com, the 4 series of directories and search tools such as Backflip, Hotlinks and SooHoo designed to make searching more efficient, and specialist search engines which list specific content, MP3, Yack, Internet Radio List, the list is almost endless.

The proliferation of search engines is evidence that no single solution exists to make searching a better experience for the user. By inference, this further devalues information as an economic good in so far as it presents the user with a picture of further uncertainty over how best to acquire what information is needed or desirable. However, there ought to be a system and method for acquiring information in a form that exhibits order and reason and therefore makes that information easier to share or sell.

There is a final area that the free provision of information affects. Such a system, while available, is not part of the present invention although it is vital that in any organisation, there be an agreed and formalised system and format available within an organisation for the collation and storage of data and reports within the system. Without such a formalised format for the storage of the data generally, it cannot be easily retrieved by other than the person who generated it and even then only with difficulty.

The well known saying "knowledge is power" is particularly important in closed organisations such as companies where employees who have access to information or who can generate it, are aware that they can benefit within their company from maintaining restrictions on access. This has the effect that within corporations, useful information is not widely enough circulated or properly structured into a company's information system.

While the almost indiscriminate dissemination of information will continue in the world wide web, the usefulness of this information will reduce, simply due to the volume of that information available. At the same time, the information is becoming all the more important for commercial organisations and business corporations generally. At the same time, they are going to become less and less anxious to disseminate this information indiscriminately to third parties without any gain for themselves. Undoubtedly, certain information disseminated may be of benefit to the company but other information may not and they may not wish to disseminate this information unless they receive some recompense for it.

Further, companies and organisations are getting particularly concerned about the fact that within their organisations, various members are collecting information which they are not disseminating to their fellow members of the organisation, either because they believe that advantage resides in keeping it entirely to themselves or simply because there is not a mechanism to encourage them to do so as it only leads to additional work for them.

Further, companies need to keep a track on how information is being collected within the company or organisation and they need to get some idea as to the value of such information. This is the only way they can value their inherent IP. A further problem not directly addressed by this patent application is the necessity for organisations to acquire information, combine it with internal information, collate the information and then disseminate it in a suitable way. Further, if companies and organisations get better methods of collecting and disseminating information, then that information will become more valuable. If it becomes more valuable, then the person or member of an organisation developing that information will be able to obtain recompense for that work and effort in preparing the information or report derived from such information.

### Statements of Invention

According to the invention, there is provided a value based method for the collection and dissemination of information acquired as the result of a search carried out by a member of an organisation, the members forming part of a system including at least a main server and input devices operated by members, the server and input devices being connected together by a communications network comprising:-
organising each search into a required search results format;
storing each search data in a search memory;
entering search details in a search access database; and
as a stored search is downloaded by another member of the organisation, details of the download are entered into the search access database to ascribe an organisation IP value to the search acquired by that download.

This will successfully track the use by members of an organisation of information prepared by other members and will also track the activities of members inputting information. Further, by ascribing an organisation value, some measure can be placed on the value of information used by members of an organisation and similarly, the value of the information inputted by members.

When a report is prepared based on one or more of these searches, the method comprises:-
storing the report data in a report memory;
entering a report identifier into a separate report access database; and
as each report is downloaded by another member of the organisation, details of the download are entered into the search access database and the report access database to ascribe an organisation IP value to the search and the report.

By noting in both the search access database and the report access database, it will be possible to keep a track on the usefulness of information or searches that have been inputted, not just simply by the number of times the search is directly accessed, but also by the number of times that reports using the search results are directly accessed.

In one method according to the invention, each time a member downloads data from either memory, an value rating is allocated to the data based on an agreed valuation unit and the rating is entered in the relevant database to provide the organisation IP value of that download. The value of this is that a check is kept on how the members of the organisation value the information that they retrieved. This can be very important for an organisation since it needs to get some idea as to how the other members of the organisation, whether they be employees or third parties, viewed the information they retrieved from the system. This can further have implications for management in that when they see that the information inputted by certain members of an organisation is highly valued by other members, some way of rewarding or encouraging that member inputting the information, can be devised.

In another embodiment of the invention, on entering a search or report onto the system:-
the member ascribes an organisation IP value to the data;
the organisation IP value is entered into the relevant access database; and
each time a data is downloaded, the organisation IP value is entered into the access database.

This allows the member inputting the data to prepare their own value of what they think has been inputted. This can be very important for control purposes and can also be very important for management who will be able to ascertain those members who consistently overvalued their inputs and those that consistently undervalue as feedback from users will be obtained.

One way in which the organisation IP value may be provided is by the time spent in man hours in acquiring and preparing the data for entry. It is envisaged that the organisation value may be set on a time basis with the organisation IP value varying for different time periods subsequent to entering a search or report onto the system. For example, it might be decided to set a very high value on what could be described as up-to-date information, while a lesser value might be ascribed to information when it is accessed some time after it had originally been prepared or indeed the opposite might apply.

Ideally, a preset time period is designated a search period and the variation in the organisation IP value is calculated having regard to the frequency of downloading of the data within the search period. What has to be appreciated is that the IP value can increase over time or decrease over time. There is no fixed rule that needs to be applied.

In one embodiment of the invention, prior to downloading data, the method comprises:-
the member, on searching, ascribes a value to the data; and
the value is entered into the relevant access database as the organisation IP value.

Alternatively, on entering a search or report in the system, the steps may be performed of:-
the member invites bids for the downloading of the data;
on receiving a bid, the member accepts or rejects a bid; and
on accepting a bid, the bid is entered into the relevant database as an organisation IP value.

When receiving such a bid, the method envisages:-
the bid being stored until a preset number of bids are received;
a bid is chosen as the datum bid; and
another preset number of bids are accepted, said bids being those closest to the datum bid.

Various other ways may be chosen, for example, the datum bid could be the one closest to the mean bid value or the median bid value or could be, for example, the second highest bid or indeed the next bid after one or more of the highest bids. It might be necessary in some cases to discourage very high bids because you might find that one or two people or indeed the person inputting the data themselves might enter very high bids for the data, in this way, inflating the value of the data. There might be a situation where information or data might not be awarded to the highest bidder. A situation might arise when it would be envisaged that the data would be supplied to a given number, say 10 people, with a mean variance of the second highest bidder or any other bid that was obtained for the data. The problem with awarding to the highest bidder, as remarked above, is that somebody can distort the generally perceived value. Thus, in the present invention, it is possible that somebody being the highest bidder might not necessary get the data. As mentioned above, it is necessary to discourage people putting in wild bids and thus making it impossible for people to bid up their own work and to encourage small incremental steps in the bidding.

The bids may be invited on the basis of downloading the data before or after some preset time in the future or of downloading the data within preset time periods from requesting the bid.

Ideally, in accordance with the present invention, the method includes the steps of:-
each member, on downloading data, allocates a value rating to the data;
the value rating is entered into the access database;
the value ratings are used to adjust the organisation IP value to provide an adjusted organisation IP value.

Ideally, in the latter method, a record is maintained of the variance between the organisation IP value allocated by each member and the mean value allocated by all the members and a variance calculated, said variance being used to alter future organisation IP values allocated in subsequent time periods by the said member.

Preferably:-
a preset time period is designated a search period;
the total IP value for each piece of data for the search period is obtained from the relevant access database;
the aggregate of all the IP values is obtained to provide a total organisation IP value.

Ideally, with this latter method, after a preset time period:-
each member is credited with the IP value of the members input of data to the system;
each member is debited with the IP value of the data downloaded; and
a net position is calculated for each member.

The number of data inputs may be recorded from each member over time and it will be appreciated that the organisation IP value may be expressed in monetary units and after a preset time period designated as the search period, an overall organisation IP value is ascribed to the organisation being the aggregate of the organisation IP values allocated over the search period and previous search periods.

Various other ways may be used to obtain a more realistic organisation IP value, for example, an adjustment multiplier may be allocated to each search period and the aggregate organisation value for the search period is adjusted by the multiplier.

In one embodiment of the invention, the search data inputted is a search structure format to enable subsequent users to obtain the most up-to-date data available without having to design the search. Similarly, the report data can be a report structure format. The advantage of these is that if, for example, a member has carried out a very useful search or prepared a report based on certain search data, if the member prepares a template, that template can be very useful for subsequent searchers or report writers.

Further, the invention provides a value based system for the collection and dissemination of information data prepared as a result of a search carried out or a report prepared based on one or more such searches, said data being prepared and made available by a member of an organisation comprising:
a communications network;
a server computer having means for organising the data in predetermined formats,
storage means in the server for the data;
means for automatically allocating a unique identifier to the data;
a search access database for storing details of the search including its unique identifier;
a report access database for storing details of the report including its unique identifier;
means for recording the downloading of data and for storing a record of the downloading in the relevant access database as the data is downloaded; and
means for allocating an organisation IP value to each piece of data stored.

The method according to the present invention will be ideally suitable for a computer program comprising program instructions for causing one or more computers to carry out the method which computer program may be embodied in a record medium, a computer memory or a read only memory or in any other way. Similarly, the invention is directed towards provided a computer programmed to carry out the method.

This system may further comprise:-
means for recording the organisation value ascribed to data each time it is downloaded to record the aggregate value of each piece of data downloaded and indeed may also comprise;
a clock for defining a search period; and
means for recording the total organisation IP value of the data downloaded in the search period.

Indeed, the system may also comprise:-
means for recording the organisation value ascribed to data when it is stored;
a clock for defining a search period; and
means for recording the total organisation IP value of the data stored in the search period.Detailed Description of the Invention

The invention will be more clearly understood from the following description of some embodiments thereof, given by way of example only, with reference to the accompanying drawings, in which:-
Fig. 1 is a layout of a system for carrying out the invention, and
Figs. 2 to 7 are various flowcharts illustrating the operation of the invention.

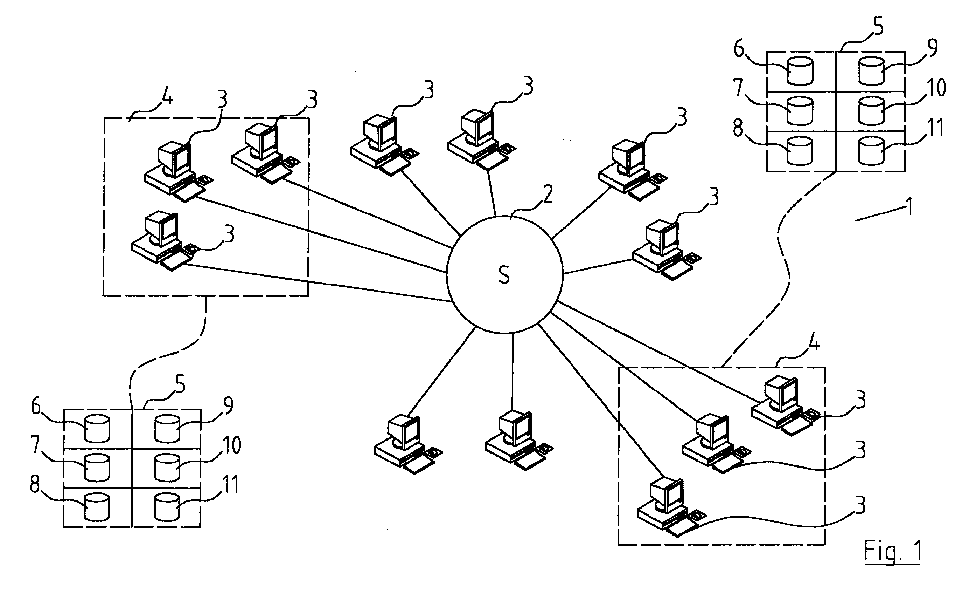

Referring to Fig. 1, there is illustrated a layout of a system for carrying out the invention comprising a communications network indicated generally by the reference number 1 comprising a host server 2 servicing a plurality of member computers 3 some of which in turn form separate organisations 4 shown by the interrupted line surrounding them. An organisation 4 could be a company with the members being the employees or it could be a grouping of people or a series of individuals. Essentially, the host server 2 forms a main server for the members computers 3 of an organisation 4. While there is shown two organisations 4 serviced by the host server 2 and a plurality of other computers 3 which can be accessed by each computer through the host server 2, there is no limit to the manner in which it can be carried out. The host server 2 is connected to main servers 5, each of which acts as a server for one of the organisations 4. Each main server 5 comprises a search format store 6, a data search memory 7, a search access database 8, a report format store 9, a report memory 10 and a report access database 11. Strictly speaking, each main server 5 will be connected through the ISP to its respective organisation 4, however, it has been shown as directly connected in the drawing. The host server 2 can be an ISP and could be, and may often be, a server on an intranet.

Essentially, each organisation 4 comprises a series of members operating member computers 3 and indeed in this specification, no distinction is made between the member computers and the members themselves. As already stated, the organisation could be a loose organisation such as a number of members all having the same interests, it could be all the one company or indeed, some members could be, in effect, a company and other members, simply individuals. However, the main thing is that they are all part of the one organisation and they are all connected to the one main server 5 within the WWW. The members 3 can be connected to other members external of the organisation or even forming part of a further organisation. However, essentially the invention, as described herein, relates to the activities of the members 3 within one organisation 4 in the communication system 1 and serviced by the server 5. Equally well, the number of databases, memories, etc. connected to the server 5 are variable. Also, each server 5 comprises a processor to carry out various calculations and operations as will be described hereinafter.

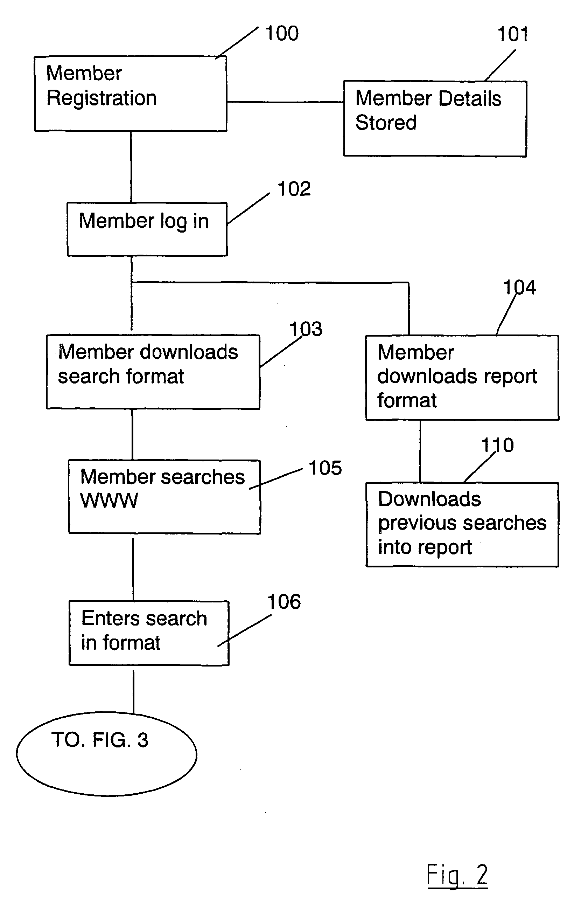

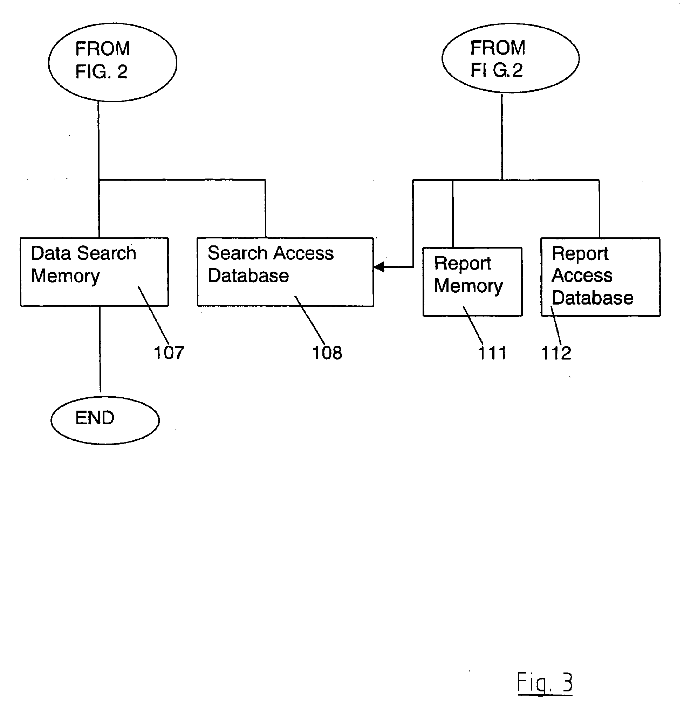

Dealing firstly now with Figs. 2 and 3, there is illustrated simply, in flow diagrammatic form, the use of the system according to the invention by a member to generate search or report data. In step 100, a member is registered and in step 101, the member details are stored. These are obviously carried out prior to any searching or the like being carried out. In step 102, the member logs into the system and various operations may take place such as an authentication of the member, detailing the log-in, and so on. In step 103, the member downloads the search format or alternatively may, in step 104, download the report format. Dealing firstly with the member simply carrying out a search, in step 105, the member carries out a search through the world wide web and in step 106, enters the search into the format required. Then in step 107, the search is entered into the data search memory and simultaneously in step 108, the fact that the search has been entered is included in the search access database. If it was a search carried out by a member and nothing further was required, then that would end the session. Alternatively, as mentioned already, in step 104, the member downloads a report format and in step 110 the member downloads previous searches into the report which could include, for example, the search carried out in step 105. It will be appreciated that the member could be carrying out searches as well as preparing a report from, not alone the data or search carried out by himself or herself, but also the searches carried out by other members.

In each case, when the search access database is entered in step 108 or the report database is entered in 112, some method of valuing the data is used to ascribe an organisation IP value to either the search acquired by that download of the search or to the search used in a report and to the report itself. How these organisational values are attributed will be discussed in some more detail below. At this stage it is assumed that this has been done.

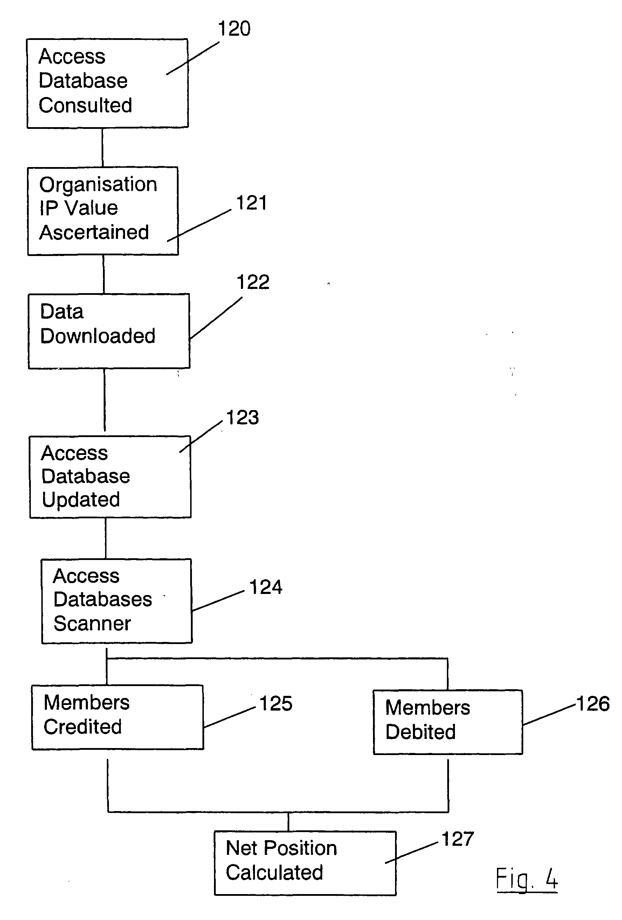

Referring to Fig. 4, there is illustrated, in a very simplified form, the downloading of data by a member. In this example, it is presumed that an organisation IP value has already been ascribed to the data whether it be a search or a report and this organisation IP data has been ascribed to it either by some automatic means and rules of the server or by the member who generated the particular search or report data. This has already been entered into the relevant access database. Thus, if a member wishes to access a particular search or a particular report, in step 120, the access database is consulted and in step 121, the organisation IP value, in step 121, is ascertained and in step 122 the data is downloaded. In step 123, the access database is updated with the download. After a period of time, in step 124, all the access databases are scanned and in step 125, members are credited with the organisation IP value that they earned during that period and in step 126 they are debited with whatever costs they incurred during to downloading data and reports. In step 127, the net position is calculated. Thus, the various members who created the various searches and reports are credited with the aggregated organisation IP value and they are similarly debited with the organisation IP value of any data they downloaded. Thus, a net position can be achieved.

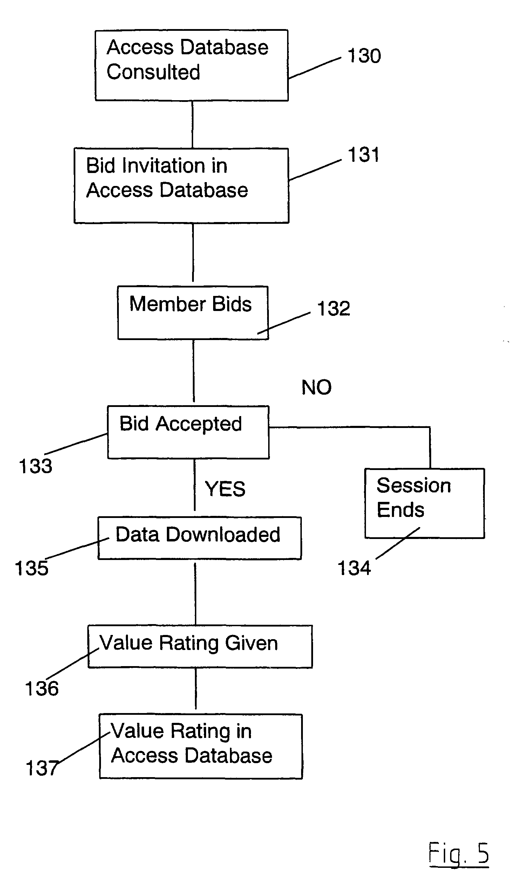

Referring now to Fig. 5, there is illustrated one way in which an organisation IP value may be allocated to data, whether it be a search or report. In step 130, the relevant access database is consulted and in step 131, the member, on accessing the relevant access database, is presented with an invitation to bid for the data. In step 132, the member bids. In step 133, either the bid is accepted or not and if it is not, then in step 134, the session ends. If, however, the bid is accepted, then in step 135, the data is downloaded and in step 136, after the data has been downloaded, the member who downloaded the data allocates a value rating to the data. In step 137, this value rating is entered into the access database for subsequent use with the bid values to provide an organisation IP value for that data downloaded.

Many forms of bidding and valuation may be used. For instance, the auction may be so arranged that in some instances, the actual information or data is not awarded to the highest bidder. For example, it could be set that the information would be given to ten people who bid, which ten people were in some mean variants of a datum bid, which datum bid could, for example, be the second highest bid, the third highest bid, it could be the mean value of all the bids received within a period, it could be the median bid of value, and so on. A problem could arise with awarding to the highest bidder in that this could distort the generally perceived value of the data being requested. Thus, depending on where the highest bid was relative to the datum, it is possible for the highest bidder to get or not to get the particular search data or report data. Obviously, the system must put in something to discourage people making wild bids or to people bidding up their own work. What is required is to use an auction system which will ascribe as closely as possible, a realistic value to the data requested.

As it will be appreciated, normally an auction has one time period and only one winner. However, in accordance with the present invention, it is envisaged that the auction could take place at different time periods, for example, one day, one week, one month, three months, and so on, after the data or report was first downloaded into the system. Therefore, somebody could bid to have a report or search data within one bid time and if they failed in that bid, they could still bid to have it in one weeks time and so on. The number and variations of the manner in which the bidding can be arranged are almost without limits. What needs to be chosen is an auction that, with the particular members, most suits the manner in which they work. To a certain extent, the organisation IP value allocated to any particular search report or other data downloaded or entered into the system will, by its very nature, be imprecise and in particular, when all the members are of the one economic unit, such as for example the one company or group of companies, this organisation IP value is, to a certain extent, irrelevant in the sense of its absolute value. One can have any valuation system because, in effect, a monetary value, as produced by the developed world, is simply a measure of exchange rates or barter values. Thus, if one uses some internal system of valuation by measuring, for example, and one is not suggesting one would, a certain number of clicks or boxes or points, then these are simply organisation IP values. When it is an internal organisation IP value, it is largely irrelevant because what management requires is to get a comparison between the input of various people and similarly to get an idea of what was the actual change in the IP generated in the organisation between various periods. Thus, what one assigns as a measure or yardstick organisation IP value, is, as said already, to a certain extent, irrelevant. However, between parties who are not connected, then the organisation IP value allocated can be very important. Obviously, with unconnected parties, some monetary value will often be the best way of attributing a value but even among unconnected parties in this sense, a notional currency rather than an absolute currency could be used.

It is envisaged that in many instances, when a member downloads data from either memory, an arbitrary value rating is allocated to the data by the server which server can be programmed to, for example, allocate a value based on the number of times a particular data is accessed or some other rule. For example, in entering data, the organisation IP value could be the time spent in man hours in acquiring and preparing the data for entry. In others situations, the member on entering a search or report onto the system, might ascribe an organisation IP value to the data, which organisation IP value could be entered into the relevant access database and each time data is loaded, then that organisation IP value is entered into the access database.

It is also envisaged that the organisation IP value may be set automatically on a time basis with the organisation IP value varying for different time periods subsequent to entering a search or report into the system. This preset time period which can be designated a search period and the variation of the organisation IP value can be calculated having regard to the frequency of downloading of the data within the search period. This organisation IP value can increase over time or decrease over time.

Alternatively, the actual member downloading the data can be the one to ascribe a value to the data and in a further embodiment of the invention, on entering a search, as described above, the member invites bids for the downloading of data and the member and reject or accept the bid. Any such bid system can include inviting bids on the basis of downloading the data before or after some preset time periods in the future or can be for within preset time periods when requesting the bid.

Ideally, each member, on downloading data, allocates a value rating to the data and the value rating is entered into the appropriate access database and then the value rating can subsequently be used to adjust the organisation IP value to provide an overall adjusted organisation IP value.

It will be appreciated that ideally a record is maintained of the variance between the organisation IP value allocated by each member whether downloading or entering data and the mean value allocated by all the members. This variance can then be subsequently used to, in some way, alter the future organisation IP values as indeed could the aggregate values.

Ideally, as explained above, the aggregate of the IP values in a particular search period should be obtained and then each member can be credited with the IP value of the members inputted data and each member debited with the IP value of the data downloaded and a net position calculated for each member. This can be particularly important where the members are of a group or of an organisation which are not necessarily financially linked. It would also be advantageous in the one organisation since these measures will allow management to get some idea as to the total value of the IP generated in any particular period and also of the contribution of the various members to the generation of that IP.

Ideally, any organisation IP value is expressed in monetary terms. This would make it very easy for any particular organisation to have some notional value of its IP.

Then, obviously, that organisation IP value can be aggregated over a period of time with possibly a multiplier or discount factor used to alter the previous values so as to provide a realistic value of the organisation IP at any particular time.

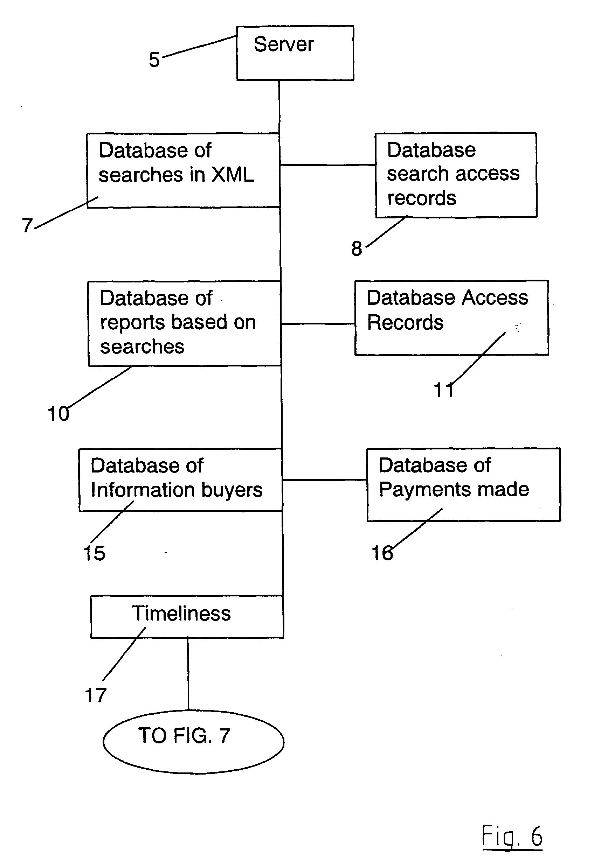

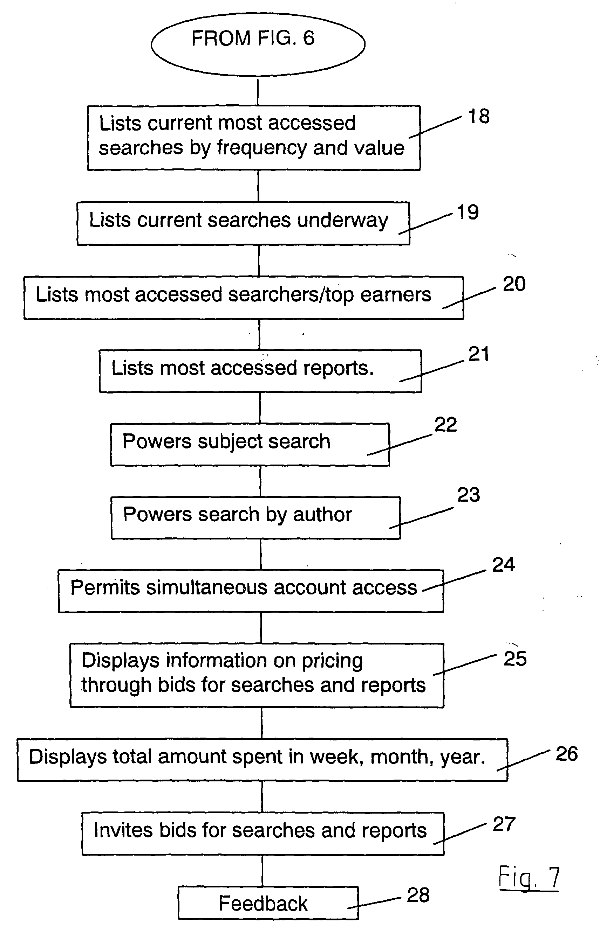

Referring now to Figs. 6 and 7, there is illustrated various types of information that could be stored in the system and in particular in the server. Some of these have been described already, thus the same reference numerals are used to identify the same elements of information. These are illustrated to show other types of databases and lists that could be provided. For example, there could be a database 15 of information buyers, namely, members accessing the database to obtain the searches or reports and 16 could be a database of payments made by various users of the system, whether it be in notional units of time or man hours or in-monetary terms. Similarly, there is provided a database 17 giving the pricing, evaluation, reporting and so on. This could be by any form of system, for example, it could be the time spent compiling a search report displayed as part of the search or report properties and this could be accessed by a potential buyer under a normal Windows properties drop-down. This would be one of the ways of carrying out the invention. Further, there could be provided a list of the most popular searches, namely, a list 18 and lists 19 of searches under way, and then a list 20 of the most accessed searches by value and access frequency. Similarly, there could be a list 21 of the most accessed reports by frequency and value.

In many instances, the frequency of access will in fact be the criteria used. Further lists of subjects by searches and subjects by authors or members inputting the data, namely, lists 22 and 23 may be provided. The server may further have means 24 for permitting simultaneous access to accounts by more than one member of a particular organisation. Thus, for example, a number of members for an organisation could come together to request the one information from another member. Further, the server is provided with means 25 for displaying information on pricing through bids for the searches and reports as previously described. Further, it is accepted that means 26 can be provided for displaying the total amount spent by any member in any particular period on searches, reports and data generally.

Finally, the server is provided with a database 27 for invitation of bids for searches and reports as previously described, There will also be a feedback mechanism 28 which feedback mechanism may be used to quantify reports to allow members, having downloaded a search or report, to give a value rating to that search or report. Any suitable feedback mechanism may be used having some scoring system, whether it be out of 5, 10 or any suitable number. This feedback mechanism would be used to quantify the value of the report to the member downloading. A certain amount of care will be required in devising a feedback mechanism which feedback mechanism may vary from organisation to organisation. For example, in one embodiment, the four criteria used were:-
Did is provide new information?
Was the information well organised?
Was it easy to understand the information?
How useable was the information that was received?

As explained already, timeliness can be an issue, for example, information can be auctioned on a time delay basis in that the prices can be set according to when the information is accessed, for example, one day hence, three days hence, a week, or some other period hence.

As explained already, the system is designed to assist organisations to generate more sharing of knowledge as well as the value of which is exchanged. In order to improve valuation of IP exchange within a company, the measures built into the system should be aggregated into overall measures. Various facts may be used to provide this. Such factors in providing an aggregate value could be:-
1. the gross transaction value ascribed,
2. trends in aggregated value,
3. gross time expended on reports/searches,
4. trends in gross time spent,
5. timeliness of information
6. trends in timeliness.

It is also envisaged that, by a suitable analysis of the data, it will be possible to identify clusters of interest. For example, it may be possible to identify those members searching on a particular subject matter and then in this way, by showing what other people have done, it will prevent somebody else having to carry out the same search all over again.

It is envisaged that means may be provided within the server to pass information to the various databases. As information is discovered by searchers, it is stored in their own specific search on the search memory. At the same time, all of this data can then be passed back to a master database using the categories generated by the users so as to collate the data received from the various members downloading information.

The method according to this present invention can be provided by any form of computer program or indeed by a computer so programmed and the computer program can be provided on any suitable readable medium and indeed it is not limited to the particular medium in which the method may be provided or indeed the system may be provided.

Essentially, the present invention creates a system which will provide a marker for information or knowledge and encourage the better retrieval, organising and sharing of knowledge. In the long run, such a system will overcome the problem of information being given away in that organisation and members can keep a control over the information being generated by them and decide as to how they are to be shared within those members of the organisation or members of other organisations. Thus, it should be possible to create a marketplace in which consumers of information can attribute and pay a fair price for what they obtain. It will be appreciated that in accordance with the present invention, the problem of differing qualities of information can be ascertained by allowing members to value the information in terms of the value to them. Thus, when the present invention allows a member downloading information to ascribe a value to that information, in effect, the operators of the system are getting the value judgement of members on the information they are receiving. If monetary payment is involved between members, one has to be very careful as to how a member will tend to downgrade information so as to pay less: it is always possible, by suitable rules, to avoid such problems. For example, in any such system, some statistical rules may be provided whereby anybody whose bid varies, there can be provided rules whereby anybody bid is more than, for example, two standard deviations away from the mean, that bid price is then automatically trebled or increased in some way as to make it punitive on somebody who consistently underbids for information.

Further, it is envisaged that the system according to the present invention will allow for a feedback mechanism on the use to which information is put and will allow members to retrospectively evaluate information in comparison with the use made of it. It is also envisaged that the organisation will be able to make estimates of the aggregate IP value generated in any particular organisation in any particular period. Thus, it will be possible to evaluate the hidden IP of a company as well as the actual statutory IP such as patents, trade marks, etc.

While it is accepted that at the present moment, any organisation IP value attributed to data generated and used within an organisation in a particular period, is of necessity an imprecise evaluation, it is at least somewhat better than absolute guesswork. Particularly, when monetary values are used, it should be possible to obtain some overall monetary value of the data generated and used in that particular period.

It is also envisaged that members in an organisation will be less likely to refuse to "pay" for information, if they in turn are getting paid for information that they download onto the system.

One of the major values of the present invention is that because the people or members downloading the information will be constrained to download search data in the required format and similarly reports it in a required format, this will greatly assist those other members trying to access that information since it will be in a format familiar and useable to them. It is a way of encouraging members to organise what is undoubtedly the useful information on the WWW into a useable format. Thus, it will overcome one of the biggest problems of the WWW, namely, the chaotic nature of the manner in which information is organised on it.

Undoubtedly, the system overcomes the problems of acquiring information that is irrelevant and being reluctant to pay for negative experience and irrelevant information by adopting information organisation systems to a market valuation procedure.

It will be appreciated from the above that the system according to the present invention allows a variety of evaluation mechanisms in that a user can nominate a price they are willing to pay and another member can refuse or accept that price.

In the specification the terms "comprise, comprises, comprised and comprising" or any variation thereof and the terms "include, includes, included and including" or any variation thereof are considered to be totally interchangeable and they should all be afforded the widest possible interpretation.

The invention is not limited to the embodiments hereinbefore described but may be varied with the scope of the appended claims.

## Claims

1. A value based method for the collection and dissemination of information acquired as the result of a search carried out by a member of an organisation, the members forming part of a system including at least a main server and input devices operated by members, the server and input devices being connected together by a communications network comprising:-
organising each search into a required search results format;
storing each search data in a search memory;
entering search details in a search access database; and
as a stored search is downloaded by another member of the organisation, details of the download are entered into the search access database to ascribe an organisation IP value to the search acquired by that download.

2. A method as claimed in claim 1, in which, when a report is prepared based on one or more of the searches comprising:-
storing the report data in a report memory;
entering a report identifier into a separate report access database; and
as each report is downloaded by another member of the organisation, details of the download are entered into the search access database and the report access database to ascribe an organisation IP value to the search and the report.

3. A method as claimed in claim 1 or 2, in which each time a member downloads data from either memory, an value rating is allocated to the data based on an agreed valuation unit and the rating is entered in the relevant database to provide the organisation IP value of that download.

4. A method as claimed in any of claims 1 to 3, in which on entering a search or report onto the system:-
the member ascribes an organisation IP value to the data;
the organisation IP value is entered into the relevant access database; and
each time a data is downloaded, the organisation IP value is entered into the access database.

5. A method as claimed in claim 3 or 4, in which the organisation IP value is the time spent in man hours in acquiring and preparing the data for entry.

6. A method as claimed in any preceding claim in which the organisation IP value is set on a time basis with the organisation IP value varying for different time periods subsequent to entering a search or report onto the system.

7. A method as claimed in any preceding claim, in which a preset time period is designated a search period and the variation in the organisation IP value is calculated having regard to the frequency of downloading of the data within the search period.

8. A method as claimed in any preceding claim, in which the organisation IP value increases over time.

9. A method as claimed in any preceding claim, in which the organisation IP value decreases over time.

10. A method as claimed in claim 1 or 2, in which, prior to downloading data, the method comprises:-
the member, on searching, ascribes a value to the data; and
the value is entered into the relevant access database as the organisation IP value.

11. A method as claimed in claim 1 or 2, in which, on entering a search or report in the system:-
the member invites bids for the downloading of the data;
on receiving a bid, the member accepts or rejects a bid; and
on accepting a bid, the bid is entered into the relevant database as an organisation IP value.

12. A method as claimed in claim 1 or 2, in which, on entering a search or a report in the system:-
the member invites bids for the downloading of data;
on receiving a bid, the bid is stored until a preset number of bids are received;
a bid is chosen as the datum bid; and
another preset number of bids are accepted, said bids being those closest to the datum bid.

13. A method as claimed in claim 12, in which the datum bid is the one closest to the mean bid value.

14. A method as claimed in claim 12, in which the datum bid is the one closest to the median bid value.

15. A method as claimed in claim 12, in which the datum bid is the next bid after eliminating one or more of the highest bids.

16. A method as claimed in any of claims 11 to 15, in which the member invites the bids on the basis of downloading the data before or after some preset time in the future.

17. A method as claimed in any of claims 11 to 15, in which the member invites bids on the basis of downloading the data within preset time periods from requesting the bid.

18. A method as claimed in any of claims 11 to 17, in which one or more of the highest bids are rejected.

19. A method as claimed in any preceding claim, in which:-
each member, on downloading data, allocates a value rating to the data;
the value rating is entered into the access database;
the value ratings are used to adjust the organisation IP value to provide an adjusted organisation IP value.

20. A method as claimed in claim 19, in which a record is maintained of the variance between the organisation IP value allocated by each member and the mean value allocated by all the members and a variance calculated, said variance being used to alter future organisation IP values allocated in subsequent time periods by the said member.

21. A method as claimed in any preceding claim, in which:-
a preset time period is designated a search period;
the total IP value for each piece of data for the search period is obtained from the relevant access database;
the aggregate of all the IP values is obtained to provide a total organisation IP value.

22. A method as claimed in claim 21, in which, after a preset time period:-
each member is credited with the IP value of the members input of data to the system;
each member is debited with the IP value of the data downloaded; and
a net position is calculated for each member.

23. A method as claimed in any preceding claim, in which the number of data inputs is recorded for each member over time.

24. A method as claimed in any preceding claim, in which the organisation IP value is expressed in monetary units.

25. A method as claimed in claim 24, in which, after a preset time period designated as the search period, an overall organisation IP value is ascribed to the organisation being the aggregate of the organisation IP values allocated over the search period and previous search periods.

26. A method as claimed in claim 25, in which an adjustment multiplier is allocated to each search period and the aggregate organisation value for the search period is adjusted by the multiplier.

27. A method as claimed in any preceding claim, in which the search data inputted is a search structure format to enable subsequent users to obtain the most up-to-date data available without having to design the search.

28. A method as claimed in any preceding claim in which the report data inputted is a report structure format to enable subsequent users to prepare a report using the most up-to-date search data available without having to design the report.

29. A computer program comprising program instructions for causing one or more computers to carry out the method as claimed in any preceding claim.

30. A computer program as claimed in claim 29, embodied on a record medium.

31. A computer program as claimed in claim 29, embodied on a computer memory.

32. A computer program as claimed in claim 29, embodied on a read only memory.

33. A computer programmed to carry out the method as claimed in any of claims 1 to 28.

34. A value based system for the collection and dissemination of information data prepared as a result of a search carried out or a report prepared based on one or more such searches, said data being prepared and made available by a member of an organisation comprising:
a communications network (1);
a server computer (5) having means for organising the data in predetermined formats,
storage means (7, 10) in the server for the data;
means for automatically allocating a unique identifier to the data;
a search access database (8) for storing details of the search including its unique identifier;
a report access database (11) for storing details of the report including its unique identifier;
means for recording the downloading of data and for storing a record of the downloading in the relevant access database (8, 11) as the data is downloaded; and
means for allocating an organisation IP value to each piece of data stored.

35. A system (1) as claimed in claim 34 comprising:-
means for recording the organisation value ascribed to data each time it is downloaded to record the aggregate value of each piece of data downloaded;
a clock for defining a search period; and
means for recording the total organisation IP value of the data downloaded in the search period.

36. A system (1) as claimed in claim 34 or 35 comprising:-
means for recording the organisation value ascribed to data when it is stored;
a clock for defining a search period; and
means for recording the total organisation IP value of the data stored in the search period.
